# EUROPEAN PATENT APPLICATION

(11) **EP 0 989 723 A2**
(43) Date of publication of application: **29.03.2000**
(21) Application number: 99203086.6
(22) Date of filing: 21.09.1999
(51) Int. Cl.: H04M 7/00, H04M 3/50

(54) **Method and system for enterprise internet protocol telephony**

(30) Priority: 22.09.1998 US 101368 P
(71) Applicant: CITIBANK, N.A., New York, New York 10043 (US)
(72) Inventor: Anderson, Robert A., Wilton, CT 06897 (US); Fetta, Michael, Pelham, NY 10803 (US); Hakim, Steve, Belle Mead, NJ 08502 (US); Horowitz, Edward, Short Hills, NJ 07078 (US); Kaufman, Michael, New Providence, NJ 07974 (US); Robinson, David K., Herndon, VA 20171-4074 (US)
(74) Representative: Hynell, Magnus

(57) **Abstract**

The invention provides a system and method for enterprise internet protocol telephony and more particularly to end-to-end voice activated financial processing over the internet or a private data network. The invention utilizes embedded equipment in an architectural solution that meshes with current telephony networks, allowing transmission of voice over the internet or a private data network for the use in such applications as financial transactions and call center business.

## Description

This application claims the benefit of U.S. Provisional Application No. 60/101,368, titled "METHOD AND SYSTEM FOR ENTERPRISE INTERNET PROTOCOL TELEPHONY", which was filed September 22, 1998.

### FIELD OF THE INVENTION

This present invention relates to a system and method for enterprise internet protocol telephony and more particularly to end-to-end voice-activated financial processing over the internet or private data networks. The present invention further relates to a method and system that utilizes equipment in an architectural solution that meshes with current telephony networks, allowing transmission of voice over the internet or private data networks for use in such applications as financial transactions and call center business.

### BACKGROUND

At the present time, U.S. businesses incur tremendous costs in the servicing of toll free numbers, such as 800 numbers. Most corporations have been encouraging automated access to their systems through utilities such as integrated voice response systems (IVRs), call centers, private data networks, and the internet. As electronic commerce expands, people and corporations will continue to have greater incentive to use these systems if access rates are substantially lower than current rates.

All the utilities described in the previous paragraph are based on voice transport utilizing the current telephone networks, local and long distance. Unfortunately, this transport is generally expensive nationally and almost prohibitively expensive internationally.

There is a need for a method and system for communication nationally and internationally such that customers may be served by telephones without businesses incurring tremendous costs of phone charges, and particularly long-distance charges.

### SUMMARY OF THE INVENTION

It is an object of the present invention to solve the problems of the existing art by providing low cost voice and other communication for businesses nationally and internationally.

It is a further object of the present invention to provide voice and other communication services via a network, such as the internet or a private data network.

It is a further object of the present invention to use voice communication over the internet or a private data network in conjunction with call center services.

It is a further object of the present invention to allow businesses to provide international call services, such as call center services, at a cost comparable to that currently provided nationally.

It is further object of the present invention to provide a method for providing voice transport over an internet protocol (IP) network between a host and an access location, comprising a caller placing a voice call from the access location, routing the call to the IP network, routing the call from the IP network to a local switching network of the host, routing the call from the local switching network to a destination maintained by the host.

It is a further object of the present invention to provide a method for providing voice-to-voice communication over an internet protocol (IP) network between a host and an access location, comprising a caller placing a telephone call from the access location, routing the call to a telephone network, providing a first transferring of the call from the telephone network to the IP network, re-routing the call from the IP network back to the telephone network, providing a second transferring of the call from the telephone network to a network integrated voice response system (NIVR), accessing information about the caller from the NIVR based on the call, downloading the accessed information to a call center maintained by the host, re-routing the call from the NIVR to the IP network, and transferring the call from the IP network to the call center maintained by the host.

It is still a further object of the present invention to provide a system for providing voice-to-voice communication with an access location over an internet protocol (IP) network, comprising a first network system coupled to the IP network, a telephone network coupled to the IP network and the host system, an access location coupled to the telephone network, and a second network system coupled to the telephone network; wherein the access location is capable of voice-to-voice communication with a host via a coordination between the telephone network and the IP network.

Additional objects, advantages and novel features of the invention will be set forth in part in the description that follows, and in part will become more apparent to those skilled in the art upon examination of the following or upon learning by practice of the invention.

### BRIEF DESCRIPTION OF THE FIGURES

In the figures:
FIG. 1 shows a prior art network view of voice transport;
FIG. 2 depicts an example network view of voice transport according to which an embodiment of the present invention is applicable;
FIG. 3 shows an architectural view of enterprise internet protocol telephony according to an embodiment of the present invention;
FIG. 4 presents the components for a Public Switched Telephone Network (PSTN) initiated call according to the method and system of an embodiment of the present invention;
FIG. 5 describes the call flow process of FIG. 4, according to an embodiment of the present invention;
FIG. 6 is an overview diagram of the components for internet initiated calls according to an embodiment of the present invention; and
FIG. 7 describes the call flow process of FIG. 6, according to an embodiment of the present invention.

### DETAILED DESCRIPTION

The present invention comprises a method and system for providing services and executing business transactions for customers using the internet or private data networks, rather than solely over regular current long distance networks. The internet is defined in this invention as any public data network. The internet serves, in this invention, as the medium over which long distance voice traffic is moved from the customer's premise to the corporate premise or call center for the purpose of executing business transactions and services; similarly, private data networks are usable wholly or partially for this purpose.

The invention substantially reduces long distance telephone charges that are incurred by corporations in servicing toll free numbers. As a result, these corporations achieve low long distance communication rates, which likewise result in lower costs for customers. Another benefit of the present invention is that it provides the capability to allow businesses to offer international services identical to those currently offered within the United States, at about the same cost internationally as nationally. Provisioning of these services both nationally and internationally at greatly reduced rates provides tremendous cost savings opportunities for U.S. businesses and corporations because it provides the capability to put the world, financially and economically, into a single forum.

Thus, an embodiment of the present invention allows customers in places such as China to access, for example, call centers worldwide pertaining to a corporation, regardless of the location of the corporation. For example, if the customer is in China, the customer can access a financial institution, such as Citibank, at a single call cost rate, whether the access location is Tokyo, Japan, Sydney, Australia, or Austin of Texas. One aspect of this architecture is that, once implemented, services, such as financial services may be provided and used without regard to the cost of long distance charges, which in many cases in the prior art was prohibitive for businesses.

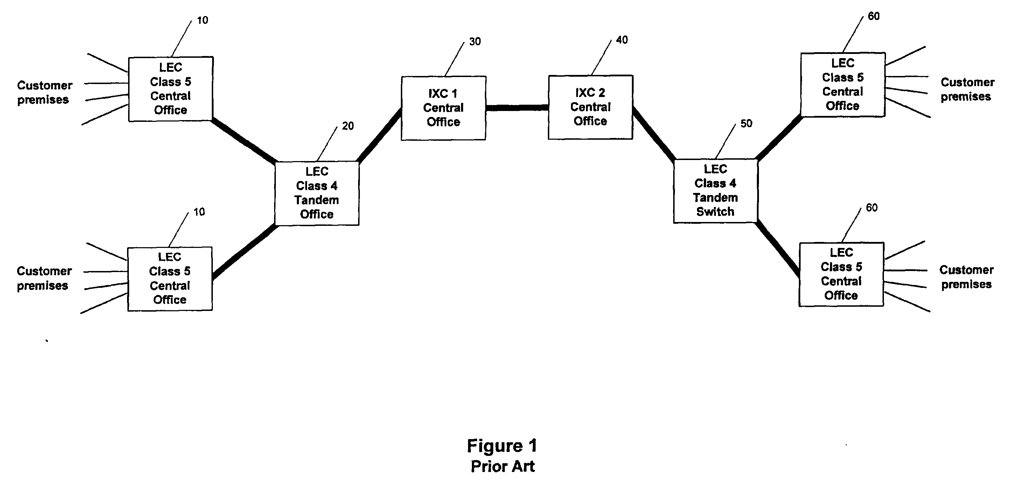

FIG. 1 shows an example of a prior art network for voice transport that has traditionally resulted in high rates for long distance telephone charges to businesses. Typically, a customer would contact a business, such as a financial institution, by dialing a toll free number such as an 800, 888, or 887 number, or some other toll free numbering scheme designated by the institution; the 800 number is used here as an example. The customer is subsequently connected, for example, to a call center maintained by the financial institution as follows.

The number the customer dials is first received and analyzed by a Class 5 local switch at one of the many central offices **10** belonging to a local exchange carrier (LEC), which is typically a local telephone company. The number includes 1-800 and additional numbers. Once the 800 portion of the number is received, the local switch **10** determines that the number is a special kind of number, and additional processing is needed. Usually, the local switch **10** further determines the carrier identification (carrier I.D.). Thus, for example, the local switch identifies MCI Worldcom by the next three numbers after the 800 number, which are 999, AT&T by the numbers 542, etc.

From the carrier ID number, the local switch **10** first determines the carrier that is servicing the 800 number by accessing a local switch database. The 800-number carrier is typically an Interexchange Carrier (IXC or IEC), which is typically a long distance carrier, such as AT&T, MCI Worldcom, or Sprint; however, local telephone companies also provide limited 800 service. Associated with the IXC are trunk groups, which can include coaxial cables or other telecommunications connections, connected to the local switch **10**. The call is then transferred to a toll office **20**, typically a Class 4 switch at a tandem office **20**. Once the call is received by the toll switch **20**, the toll switch receives the 800 number from the local office. The toll switch **20** also recognizes that the 800 number is atypical, and the toll switch refers to an adjunct database for information regarding the IXC identified by the local switch database.

The toll switch **20** uses the 800 number as a key, and the adjunct database provides an actual destination number (described further below), so that the database basically provides the switch with indication of whether the 800 number that was dialed by the customer should be dialed and the call transmitted to a destination number, which has the following form: NPA-NXX-XXXX, assuming the North American Numbering Plan (NANP) is followed. NPA is the area code, NXX is basically an exchange number, and XXXX is the four-digit line number. The destination number provides the number of the destination location and number where that call should terminate, such as a call center private branch exchange (PBX).

The toll switch **20** then switches the call to a similar destination toll switch **50**, which can be located thousands of miles away, via IXC central offices **30** and **40**, based on information regarding such IXC(s) from the adjunct database. The central offices **30** and **40** may be parts of the same IXC or of different ones, and the call can be transferred from one toll switch to another using, for example, microwave communications, fiberoptic lines, or plain old telephone service (POTS) lines. The destination toll switch **50** then determines from the destination number which terminating local switch **60** services the exchange indicated by the number, and the toll switch **50** then sends the call to that local switch, which dials the destination. In this case, the destination is a call center maintained by the financial institution and designated with the exchange being called. The call is then connected, for example, to a call center PBX.

With the advent of 800 portability, customers no longer have to stay with a particular long distance carrier in order to retain their 800 numbers. Before, for example, a customer with a toll free number starting with 800-999 must have MCI Worldcom as the long distance carrier for the number. Now, with the creation of an 800 data base service as required by the Federal Communication Commission (FCC), customers own their 800 numbers, and they are able to pick their long distance carriers, the same way that individuals pick carriers for home phone numbers. Thus, businesses can each have its own 800 number(s), and these businesses can have their calls transported by, for example, MCI today and by AT&T tomorrow, and by Sprint the next day.

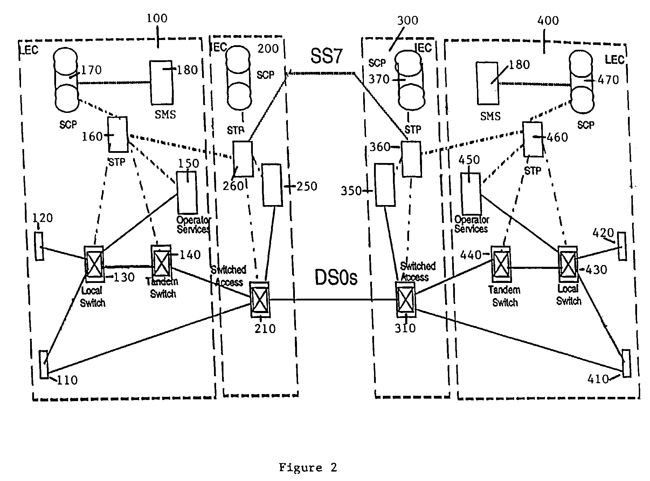

FIG. 2 provides a telephone network view as an example of the current state of the art in network architectures supporting commercial systems, such as call centers, and providing 800 portability. The present network architecture operates as follows. A communication request, such as a phone call, is initiated at an input terminal, such as a telephone. The call is then connected to the network via a network interface device (NID) **110** or a local loop **120**, which are parts of the local network **100** of a LEC. Depending on its nature, the call from the NID **110** can either be routed to an interoffice facility within the LEC network **100** or directly to a switched access **210** within the network **200** of an IEC. The call from the local loop **120** is also routed to an interoffice-facility of the LEC network **100**. The interoffice facility comprises a local switch **130** and a tandem switch **140**. The local switch **130** functions similarly to the Class 5 local switch mentioned earlier and provides direct connections with the local loop **120** and the NID **110.** The tandem switch **140** functions similarly to the Class 4 switch mentioned earlier and acts as an intermediate switch connecting one trunk to another and to the switched access **210**, which is another intermediate switch belonging to the IEC network **200**. The local switch **130** then connects the call from either the NID **110** or the local loop **120** to a trunk group to be switched by the tandem switch **140**.

When needed, the interoffice facility, which includes the local switch **130** and the tandem switch **140**, requests and receives information and/or instructions to route the call from an operator services center (OSC) **150** and a signal transfer point (STP) **160** within the LEC **100**. The OSC **150** handles a variety of telephone services which need the assistance of an operator, such as collect calls, calling card calls, third-party billing calls, and person-to-person calls. The STP **160** is a packet switch within a network that converts dialed digits to data messages. It requests and receives call routing information and instructions from an appropriate database indicated by the service control point (SCP) **170**. The database supplies the translation and routing data needed to deliver advanced network services, such as toll free number, calling card, collect and third-party billing telephone calls, and it is made available to the local SCP **170** by a national service management system (SMS) **180**, which also updates information on callers, subscribers, and services for billing and administrative purposes. The STP **160** then channels the received information and instructions to the local switch **130**, the tandem switch **140**, the local OSC **150**, and/or the STP **260** and OSC **250** of the IEC **200** to facilitate routing of the call. Additional information and instructions may also be available from the SCP **270** of the IEC **200**. The database of the SCP **270** is also made possible by the national SMS **180** (not shown connected).

The call is now transferred from the switched access **210** of the IEC **200** that is associated with the originating LEC **100** to the switched access **310** of the IEC **300** that is associated with the destination LEC **400** via digital signal, level zero (DS0) communication protocol. It should be noted that the IEC **300** and the IEC **400** may be parts of the same telecommunication company or of different ones. Concurrently, the data needed to route the call and deliver advanced network services associated with the call are also transferred from the originating IEC **200** to the destination IEC **300** via signaling system 7 (SS7) networking protocol. The destination IEC **300** and LEC **400** function similarly to the originating IEC **200** and LEC **100**, but in a reverse manner, to route the call to the appropriate destination NID **410** or local loop **420**.

When a customer accesses a business, such as a financial institution, at one of its call centers being managed by the network structure of FIG. 2, the customer begins, for example, by dialing a toll free number provided by the financial institution. The toll free number can be an 800 number, an 888 number, an 887 number, or some other toll free numbering scheme; the 800 number is used here as an example. The number the customer dials is sent from the local loop **120** or the NID **120**, and received and analyzed by the local switch **130**. The number includes 1-800 and additional numbers. Once the 800 portion of the number is received, the local switch **130** determines that the number is a special kind of number, and additional processing is needed. It then processes the call according to routing instructions it receives from an appropriate SCP **170** via the STP **160**. The routing instructions include the identification of the carrier of the 800 number, which can be an LEC or an IEC, and the 10-digit destination number mentioned earlier. Thus, if the 800 number is managed by either the IEC **300** or IEC **400**, additional routing instructions will be given by the respective STPs **260**, **360** and SCPs **270**, **370**. The routing instructions enable the call to be directed to a destination tandem switch **440** servicing the destination number. The tandem switch **440** then determines from the destination number which terminating local switch services the exchange indicated in the destination number, and the tandem switch **440** then sends the call to the appropriate local switch **430**, which dials the destination at the appropriate local loop **410** or local loop **420** corresponding to, for example, a call center PBX. The call is then connected.

The networking processes shown in FIGs. 1 and 2 are entirely regulated by the Federal Communications Commission (FCC). Regulations include strict quality requirements, strict post dialing delay requirements, and charge levy restrictions, particularly relating to the distance covered by the call. These figures are intended to be representatives only, in order to explain typical existing configurations, and also in order to show the high level of complexity into which existing networks are typically bootstrapped, which is a fundamental contributor to the current high rates for calls and high cost of voice transport. For example, for each toll free call received by a business, the business has to pay both the local connection to an LEC and a long distance charge to an IEC, not to mention the service charges from the carrier of the toll free number.

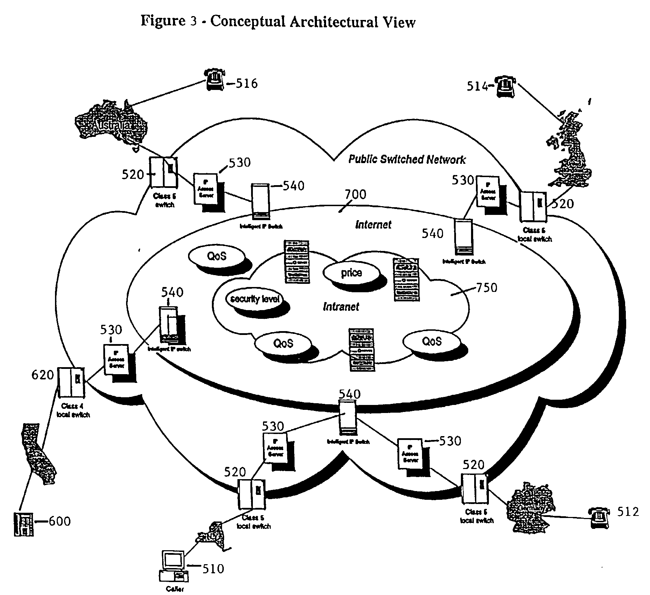

An embodiment of the present invention involves a different approach to long distance calling and other voice communications. As shown in the architectural view presented in FIG. 3, in an embodiment of the present invention, the call procedure differs from the prior art as follows. After a toll free number, such as an 800 number, is dialed by a customer from any one of the illustrated locations **510**, **512**, **514**, and **516**, the call goes into a local office **520** corresponding to that originating location. The local office **520** is typically a Class 5 local switch, and it determines the carrier I.D. by comparison to a database for carrier I.D on the internet protocol (IP) access server **530** associated with each of the local offices **520**. In an embodiment of the present invention, this carrier I.D. is not the normal carrier I.D., but a special carrier I.D. designated for use with the present invention. This new carrier I.D. has its own outgoing trunk groups from the local switch **520**, which terminate at an IP router switch **540**. In contrast to typical telephone switches of the prior art, the IP router switch **540** used by the present invention at its receiving end is connected to trunk groups for calls connected to the local office **520** and other offices. Thus, this end of the IP router switch **540** functions similarly to a toll switch or a tandem switch of the prior art, as far as protocol is concerned. At its other end, the IP router switch **540** sends the call across a packet network instead of a traditional circuit network. This allows the IP router switch **540** to send the call as a data stream usable over, for example, the internet **700** or a private data network **750**. Thus, for example, an embodiment of the present invention uses an IP router switch **540** that is an Internet Protocol Exchange (IPX) machine router switch having an IP address known to the internet like any other server. This IP router switch **540** thus receives and sends data over the network.

Thus, according to an embodiment of the present invention, a call is received, the call information is inputted into a database or an adjunct database **530**, the call is mapped, the 800 number is mapped similarly to the way the switches of the prior art map numbers, but the database includes another field that maps the call to an IP address of the IP router switch **540** servicing that number. In an embodiment of the present invention, the voice data from the customer is converted in the IP router switch **540** into packet data, using a method that is known in the art. The packet data is thus transmitted as data streams, which may be communicated, for example, over the internet using a method that is a lot cheaper than the prior art and equally as fast. Thus, the present invention incorporates the use of information about the call that allows the system to determine that the call terminates, for example, in Los Angeles, but also that the call is addressed to the IP address of an IP router switch **540** located in Los Angeles. Once the information regarding the IP address is determined, the call is routed through, for example, the internet **700**.

Another advantage of the present invention is that it eliminates the need for an international numbering agreement and code because the present invention bypasses all of the current telecommunication regulations and allows use of international 800 numbering. The fundamental reason for this is that the present invention functions as an international transport and relies upon a local connection to a national telecommunication company or post telephone and telegraph administration (PTT). Although the long distance/international carrier may still have to pay long distance (LD) charges to the local PTT, for instance, when the IP router switch is physically located at some long distance away from the caller's initiated calling point, the overall resulting cost can be at least an order of magnitude lower than what is currently paid for long-distance charges. The main other charges that the carrier is expected to charge as a fair cost per line may include the following: 1) administrative work such as billing; 2) cost of a connection, such as a T1 or T3 line, from the local office to the toll offices; and 3) cost of equipment or cost of lease.

In the future, customers are expected to continue to utilize present network capabilities, and with the continued evolution of products in the market, including the present invention, much of the network capabilities continue to be available. The following list encompasses some of the more critical capabilities and services that are incorporable into a PSTN/IP network solution in accordance with an embodiment of the present invention: 1) very low per port costs (capital); 2) enhanced services such as multiple call handling, hold, retrieve, and selective drop; operator assistance; routing rules for inbound calls; Dual Tone Multiple Frequency (DTMF) generation for interaction with IVR and voice mail systems; corporate/personal directory lookup and dial; and speed dials and voice mail shortcuts; 3) reliable local and long distance voice and data service over IP networks; 4) managed bandwidth and quality of service mechanisms based on type of service, source/destination, protocol, and originating/terminating location; 5) central office switch routing for IP access (essentially a network element); 6) availability of billing/directory services; 7) transparent access to caller (no special equipment required); and 8) utilization of a corporate "intranet" for added security and cost savings.

In an embodiment of the present invention, for call center applications using the network architectural framework of FIG. 3, calls initiated through the Public Switched Telephone Network (PSTN) continue to be handled by the Network Integrated Voice Response system (NIVR) in the same manner as with telephone calls over existing call networks, as described, for example, in the following. The NIVR is includes multiple IVRs at different locations connected together by a network that can route incoming calls to any one of the IVRs. The NIVR first receives a request via the present mechanisms as they are proposed and implemented in accordance with the network architecture in FIG. 3. The call flow changes are reflected in the NIVR to PSTN handoff. In this case, the NIVR returns the respective PSTN toll free number as it presently does. The call is then terminated to the IP access/IP switch, which performs address translation and routes the call to the appropriate terminating IP access/IP switch and onto the terminating call center.

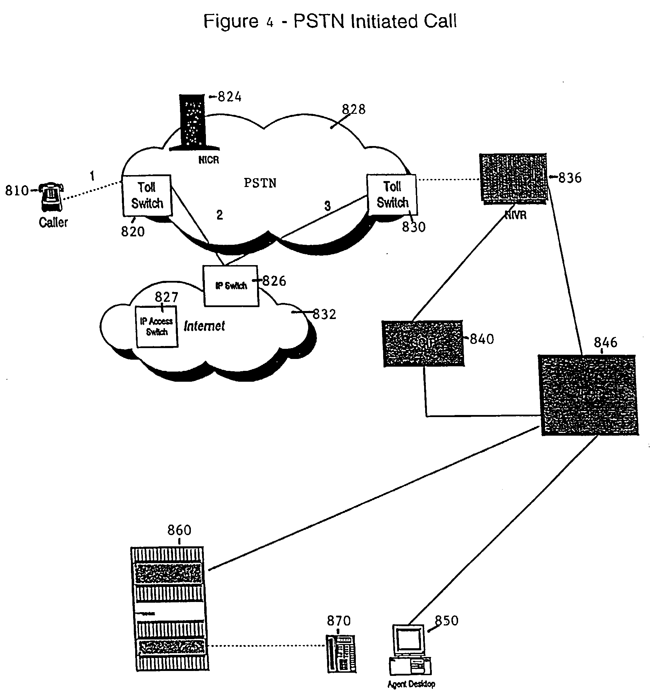

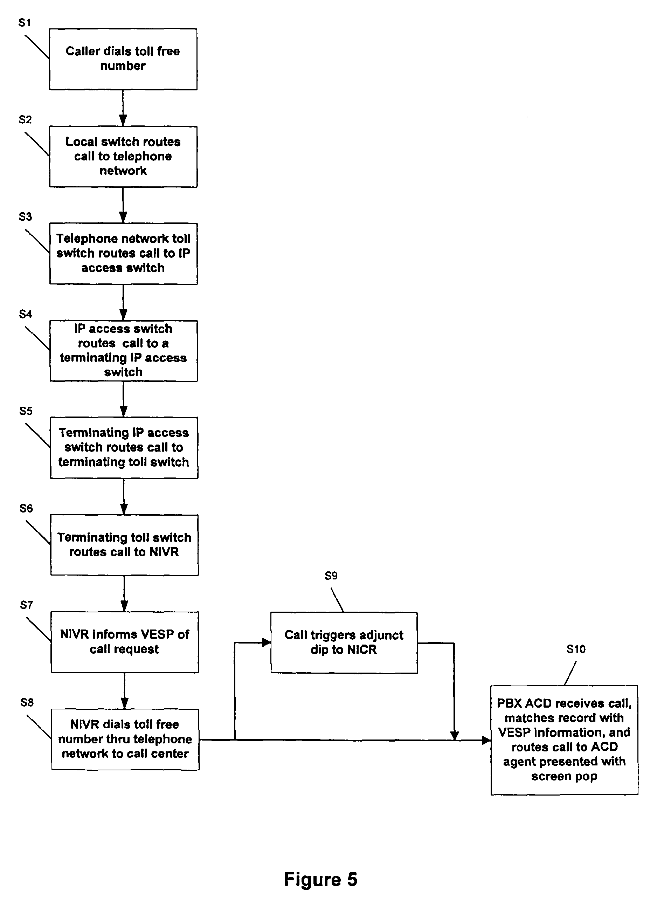

FIGs. 4 and 5 illustrate the call flow of a PSTN initiated call over the network shown in FIG. 3, as described above, in accordance with an embodiment of the present invention. The call flow uses and interacts with applications and existing systems of a business, such as a financial institution, as follows. In **S1**, the customer **810** begins by dialing a toll free number given by the financial institution. In **S2**, a local switch (not shown) performs digit analysis of the number and routes the call to a telephone network **828**, such as that of an IXC (e.g., MCI), chosen by the financial institution as the carrier of the toll free number. In **S3**, the call enters the telephone network through a toll switch **820**, which then routes the call through the IP backbone intra/inter network **832** (either the financial institution's private data network or the internet is usable for transport) using an IP switch system **826** as a network router. A PSTN-to-IP, i.e., voice-to-IP, conversion is first performed on the call by an IP access switch **827** upon its entrance into the IP network **832**. In **S4**, the call is then routed by the IP switch system **826** to a terminating IP access switch, also represented by block **827**, where the call is re-converted from IP back to PSTN. In **S5**, the reconverted call is routed from the IP access switch to a terminating toll switch **830**. Subsequently in **S6**, the terminating toll switch **830** routes the call to a terminating NIVR **836** of the financial institution. Since the call traverses both the PSTN and IP network in an embodiment of the present invention, the caller's initiated terminal **810** must have DTMF tone, i.e., touch tone, capability.

Consequently, the NIVR **836** receives and begins processing the call. The NIVR **836** manages services such as multiple call handling, hold, retrieve, routing rules for inbound calls, etc. In **S7**, the NIVR **836** informs a Voice Enhanced Service Processor (VESP) **846** of the call request as follows. The NIVR **836** processes the call and sends customer or call contact information to a comprehensive central database, e.g., a Global Customer Information Facility (GCIF) **840**, for validation. The GCIF **840** is a system that accesses customer account information. In **S7**, the GCIF **840** sends call contact information to a Voice Operated Exchanger (VOX) server on the VESP **846**. The call contact information include, for example, account number of the caller, originating Automatic Number Identification (ANI) (i.e., caller ID), place of exit from the NIVR, and/or call-ID provided by the NIVR (pseudo-ANI). The originating ANI is, for example, the 10-digit telephone number assigned to the input terminal at which the caller initiates the call, assuming again that the NANP is being used. The place of exit from the NIVR information is needed to route the customer account information to a proper call center. The NIVR determination of a proper call center depends on a number of parameters set out by the financial institution; for example, the least busy call center in the overall network of the institution will the get the call. The pseudo-ANI identifies the destination call center to which the call is routed. It is an internal ANI, recognized only by the financial institution network, that has been convened from the original ANI by the NIVR **836**. This is done, for example, by having the NIVR **836** replacing the last 5 digits of the original ANI with 5 pseudo ANI digits.

The VOX server is typically a software residing on the VESP **846** that provides voice activation of the VESP **846** to coordinate and track incoming call information. A record of such information is kept for administrative purposes, such as when the call center wants to gather statistical information about the number of incoming calls, duration of the calls, etc.; or in case the call gets disconnected, the customer service agent (CSA) at the call center can call back the customer. After receiving and processing the call contact information from the GCIF **840**, the VESP **846** forwards the information to a Voice Data Unit (VDU) server (not show). The VDU server creates a VDU record containing, for example, VDU-ID, Pseudo-ANI, and Customer Identification Number (CIN) (from GCIF). Together, the VOX server, the VESP, and the VDU server form a Computer Telecity Interface (CTI) that enables customer information relating to the calling customer to be downloaded to the proper call center and displayed on the desktop computer of the proper CSA handling the call from the customer. This so called screen pop at the CSA desktop **850** presents the CSA with information such as the customer's name and account number, and other information as desired by the financial institution, so that the CSA can better serve the customer.

In **S8**, while the NIVR **836** processes the call to provide the screen pop as described above, it also converts the toll-free number of the call into a regular number and dials the latter to connect the call to a call center via the telephone network **828**. In **S9**, the call arrives back at the toll switch **830** and alternately can trigger an adjunct dip to another level of call routing, such as the Network Interactive Call Response (NICR) **824**, for future upgrades. The NICR, for example, provides more capability in terms of holding, redirecting, and rerouting calls in various situations. The route is then returned from the NICR, or if there is not another level of call routing, the route remains at the toll switch **830**, and the call is routed by the telephone network **828** to a terminating local PBX Automatic Call Distributor (ACD) **860**, which acts as the call center PBX. The PBX ACD **860** is a switch located at each call center of the financial institution, and it takes incoming calls and route them to available CSAs. Finally in **S10**, the PBX ACD **860** receives the call, matches the call record with the VESP information, and routes the call to the particular CSA **870** that is presented with the screen pop **850** of the customer information of the caller, as mentioned earlier. The call is now connected. Voice transport from the CSA **870** back to the caller **810** during the call is done in reverse through the same route as described above, i.e., through the PBX ACD **860** to the NIVR **836** and the toll switch **830**, through the IP network **832** with PSTN-to-IP-to-PSTN conversions, to the toll switch **820**, and back to the caller **810**.

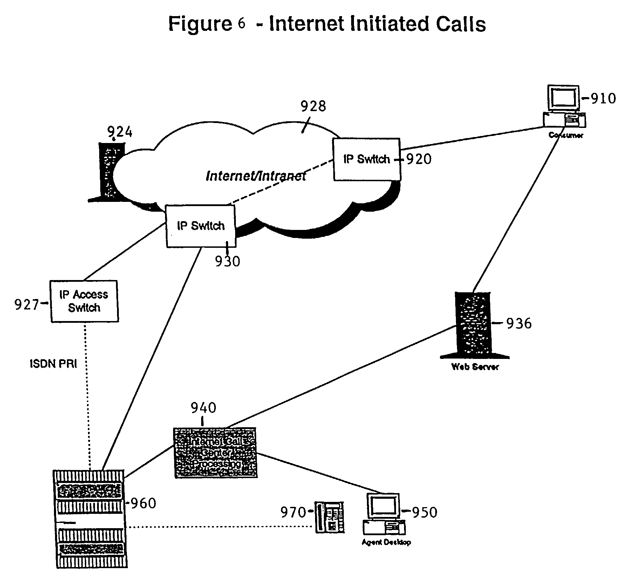

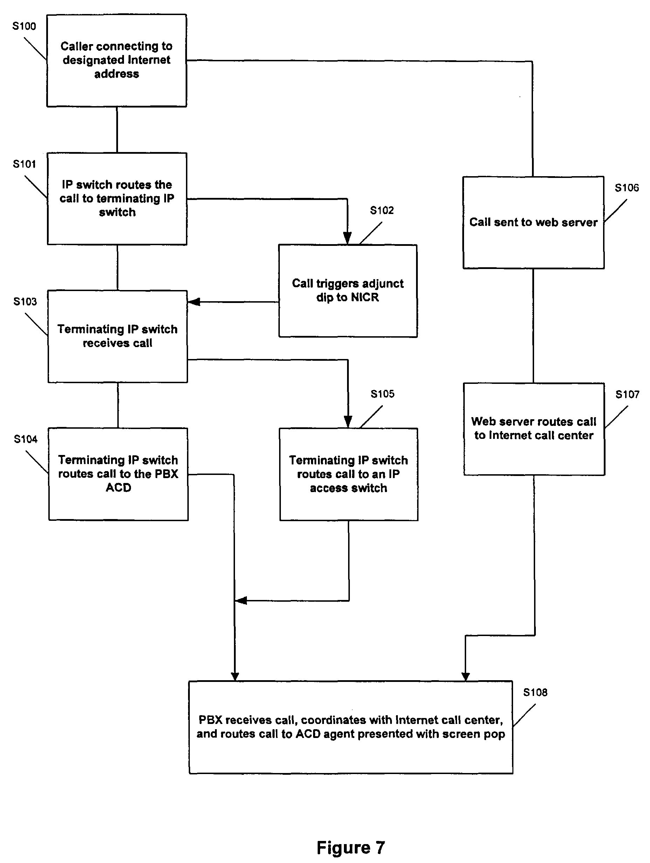

In another embodiment of the present invention, the customer can initiate the call directly through the internet rather than via the PSTN as described above. Figs. 6 and 7 illustrate the call flow of an internet initiated call over the network shown in FIG. 3, in accordance to an embodiment of the present invention. In **S100**, the customer begins by accessing a computer and internet telephone **910** and calling to an IP address provided by the financial institution. PSTN-to-IP conversion of the call is typically done at the customer location **910**. In **S101**, an IP switch **920** routes the call, via an IP backbone intra/inter network (again, either the financial institution's private data network or the public internet is usable for transport), to a terminating IP switch **930**. In **S102**, once again, the call may also trigger an adjunct dip to another level of call routing, such as the NICR **924**, for future upgrades. In that case, the call is subsequently returned from the NICR **924** back to the terminating IP switch **930**. In **S103**, the IP switch **930** receives the call and performs the IP-to-voice conversion as requested. In **S104**, it routes the call to the local PBX ACD **960** maintained by the banking institution. Alternatively in **S105**, the IP switch **930** can route the call to an IP access switch **927** for a different connection protocol with the PBX ACD **960** using, for example, Integrated Services Digital Network Primary Rate Interface (ISDN PRI), which is a well known communication protocol in the art. In this instance, either the IP access switch **927** or the IP switch **930** can perform the IP-to-voice conversion as requested.

In **S106**, the internet initiated call from the computer **910** is also sent to an IP access web server **936** maintained by the financial institution, based on the accessed internet address. In **S107**, the server **936** routes the call to an internet call center **940** for processing. The call center **940** functions similarly to the CTI of FIG. 4 in that it coordinates with the PBX ACD **960** to download customer information relating to the particular calling customer to the proper call center and display such information on the desktop computer **950** of a CSA **970**. This screen pop at the CSA's desktop **950** presents the CSA **970** with information such as the customer's name and account number, and other information as desired by the financial institution, so that the CSA can better serve the customer.

Finally in **S108**, the PBX ACD **960** receives the call from either the IP access switch **927** or the IP switch **930**, coordinates with the internet call center **940**, and routes the call to the particular CSA **970** that is presented with the screen pop of customer information as mentioned earlier. The call is now connected. Voice transport from the CSA **970** back to the caller **910** during the call is done in reverse through the same route as described above, i.e., through the PBX ACD **960** to the IP access switch **927** or IP switch **930** with PSTN-to-IP conversion, through the IP network **928** to the IP switch **920**, and with IP-to-PSTN conversion back to the caller **910**.

PSTN initiated calls and internet initiated calls provide substantial savings to businesses. Long distance charges relating to toll free numbers maintained by the businesses for customer services are practically eliminated. Furthermore, with internet initiated calls, local phone charges are also eliminated. The result is lower overheads and substantial savings to the businesses, which can be passed on to the consumers.

Embodiments of the present invention have now been described in fulfillment of the above objects. It will be appreciated that these examples are merely illustrative of the invention. Many variations and modifications will be apparent to those skilled in the art.

## Claims

1. A method for providing voice transport over an internet protocol (IP) network between a host and an access location, comprising:
receiving a voice call from a caller at the access location;
routing the call to the IP network;
routing the call from the IP network to a local switching network of the host; and
routing the call from the local switching network to a destination maintained by the host.

2. The method of claim 1, wherein the destination is a call center of the host.

3. The method of claim 1, wherein the host is a financial institution.

4. The method of claim 1, wherein routing the call from the local switch network to the destination comprises routing the call to one of a plurality of customer service agents of the host located at the destination.

5. The method of claim 1, wherein the local switch network comprises a private branch exchange (PBX) maintained by the host.

6. The method of claim 1, wherein routing the call to the IP network comprises:
routing the call to a first IP switch of the IP network;
converting the call from voice format to IP format;
routing the call in IP format from the first IP switch to a second IP switch of the IP network; and
re-converting the IP-formatted call received at the second IP switch to voice format.

7. The method of claim 1, further comprising routing the call from the access location to a server system maintained by the host.

8. The method of claim 7, further comprising:
the server system accessing information about the call upon receipt of the call; and
downloading the accessed information to the destination maintained by the host.

9. The method of claim 1, further comprising routing the call from the access location to a server system maintained by the host.

10. The method of claim 9, further comprising:
the server system accessing information about the call upon receipt of the call;
transferring the accessed information to a call processing center of the host; and
the call processing center coordinating with the PBX to download the accessed information to the destination in concurrence with routing the call from the local switching network to the destination.

11. The method of claim 10, wherein the destination is staffed by an agent of the host.

12. The method of claim 1, wherein routing the call to the IP network comprises:
routing the call to a first IP switch of the IP network;
routing the call from the first IP switch to a separate level of call routing; and
returning the call from the separate level of call routing to a second IP switch of the IP network.

13. The method of claim 12, wherein routing the call from the IP network to the local switching network comprises routing the call from the second IP switch of the IP network to the local switching network.

14. The method of claim 1, wherein routing the call to the IP network comprises:
routing the call from the access location to a telephone network; and
routing the call from the telephone network to the IP network.

15. The method of claim 14, wherein routing the call to the telephone network comprises:
routing the call from the access location to a first toll switch of the telephone network.

16. The method of claim 15, wherein routing the call from the telephone network to the IP network comprises:
routing the call from the first toll switch of the telephone network to a first IP switch of the IP network;
sending the call through the IP network from the first IP switch of the IP network to a second IP switch of the IP network;
routing the call from the second IP switch of the IP network to a second toll switch of the telephone network;
routing the call from the second toll switch of the telephone network to a call response system;
accessing information of the caller from the call response system;
validating the caller information; and
sending the validated caller information to the destination maintained by the host.

17. The method of claim 16, wherein the host is a financial institution.

18. The method of claim 17, wherein sending the validated caller information to the destination comprises:
sending the validated caller information to a computer staffed by an agent of the financial institution.

19. The method of claim 17, wherein routing the call from the local switching network to the destination comprises routing the call from the local switching network to a voice terminal staffed by the agent of the financial institution.

20. The method of claim 16, wherein routing the call from the telephone network to the IP network further comprises:
routing the call from the call response system to the IP network.

21. The method of claim 16, wherein routing the call from the telephone network to the IP network further comprises:
routing the call from the call response system back to the second toll switch of the telephone network;
sending the call from the second toll switch to another call response system;
returning the sent call from the another call response system; and
routing the returned call to the IP network.

22. A method for providing voice-to-voice communication over an internet protocol (IP) network between a host and an access location, comprising:
receiving a telephone call from a caller at the access location;
routing the call to a telephone network;
providing a first transferring of the call from the telephone network to the IP network;
re-routing the call from the IP network back to the telephone network;
providing a second transferring of the call from the telephone network to a network integrated voice response system (NIVR);
accessing information about the caller from the NIVR based on the call;
downloading the accessed information to a call center maintained by the host;
re-routing the call from the NIVR to the IP network; and
transferring the call from the IP network to the call center maintained by the host.

23. The method of claim 22, wherein the host is a financial institution.

24. The method of claim 22, wherein the telephone network is a public switched telephone network (PSTN).

25. The method of claim 22, wherein the IP network is an internet.

26. The method of claim 22, wherein the IP network is a private data network maintained by the host.

27. The method of claim 22, wherein:
transferring the call from the IP network to the call center comprises transferring the call to a voice transport terminal at the call center; and
downloading the accessed information to the call center comprises downloading the accessed information to a computer at the call center associated with the voice transport terminal.

28. The method of claim 27, wherein the voice transport terminal is a telephone staffed by a customer service agent (CSA) of the host.

29. The method of claim 28, wherein the computer at the call center is serviced by the same CSA of the host.

30. The method of claim 29, wherein the CSA is able to concurrently answer the call and view the accessed information on the computer.

31. A system for providing voice-to-voice communication with an access location over an internet protocol (IP) network, comprising:
a first network system coupled to the IP network;
a telephone network coupled to the IP network and the host system;
an access location coupled to the telephone network; and
a second network system coupled to the telephone network;
wherein the access location is capable of voice-to-voice communication with a host via a coordination between the telephone network and the IP network.

32. The system of claim 31, wherein the voice-to-voice communication between the access location and the host comprises:
a telephone call sent from the access location to a telephone number provided by the host.

33. The system of claim 32, wherein the telephone network comprises:
a first toll switch for routing the telephone call through the telephone network; and
a second toll switch for routing the telephone call from the telephone network to the second network system of the host.

34. The system of claim 33, wherein the IP network comprises:
an IP switch system for receiving and sending the telephone call to the second toll switch of the telephone network; and
a terminating IP access switch associated with the first network system.

35. The system of claim 34, wherein the IP switch system comprises:
a first IP switch for receiving the telephone call from the first toll switch via the telephone network and converting the telephone call from a voice format to an IP format; and
a second IP switch associated with the second network system for receiving the IP format of the telephone call and re-converting the IP format back to the voice format.

36. The system of claim 34, wherein the IP access switch system comprises:
a first IP access switch for receiving the telephone call from the first toll switch of the telephone network, converting the telephone call from voice format to IP format, and routing the IP-formatted call through the IP network; and
a second IP access switch for receiving the IP-formatted call from the first IP access switch via the IP network, re-converting the IP format of the telephone call back to voice format, and sending the re-converted telephone call to the second toll switch of the telephone network.

37. The system of claim 33, wherein the second network system comprises:
a voice response system for accessing information about the telephone call and dialing the telephone number upon receipt of the telephone call from the second toll switch system of the telephone network;
a database for receiving the accessed information from the voice response system and validating the accessed information; and
a processor for receiving the validated information and, in conjunction with the database, downloading the validated information to a computer staffed by an agent of the host.

38. The system of claim 37, wherein the processor is a voice enhanced service processor (VESP).

39. The system of claim 37, wherein the database is a global customer information facility (GCIF).

40. The system of claim 37, wherein the voice response system is a network integrated voice response system (NIVR).

41. The system of claim 33, wherein the first network system comprises:
a private branch exchange (PBX) maintained by the host and coupled to the IP network for receiving the telephone call and routing the telephone call to an agent of the host.
